# EUROPEAN PATENT APPLICATION

(11) **EP 4 787 866 A1**
(43) Date of publication of application: **05.08.2026**
(21) Application number: 24870685.5
(22) Date of filing: 24.09.2024
(51) Int. Cl.: H04N 21/431

(54) **INFORMATION DISPLAY METHOD AND APPARATUS, ELECTRONIC DEVICE, AND STORAGE MEDIUM**

(30) Priority: 26.09.2023 CN 202311249091
(71) Applicant: Beijing Youzhuju Network Technology Co., Ltd., Beijing 101299 (CN)
(72) Inventor: LUO, Yongliang, Beijing 100028 (CN); ZHOU, Man, Beijing 100028 (CN); WANG, Yuchen, Beijing 100028 (CN); LUO, Jiayin, Beijing 100028 (CN); GUI, Shidan, Beijing 100028 (CN); ZHANG, Xiang, Beijing 100028 (CN); CHANG, Chenyang, Beijing 100028 (CN); LI, Yaqi, Beijing 100028 (CN); YANG, Xiao, Beijing 100028 (CN); LI, Shiyi, Beijing 100028 (CN)
(74) Representative: Isarpatent
(86) International application number: PCT/CN2024/120584
(87) International publication number: WO 2025/067141

(57) **Abstract**

The present disclosure relates to an information presentation method and apparatus, an electronic device and a storage medium. The method includes: presenting a target page, wherein the target page includes an object detail presentation area and a candidate object set presentation area, and the candidate object set presentation area is used for presenting first abstract information of each candidate object in a candidate object set; and in response to a selection operation for one piece of first abstract information in the candidate object set presentation area, presenting detail information of a first target object in the object detail presentation area, wherein the first target object is a candidate object corresponding to the selected first abstract information. Therefore, the operation steps of browsing the detail information of different objects can be simplified, and the operation time consumption can be shortened.

## Description

### CROSS-REFERENCE TO RELATED APPLICATION(S)

The present application claims the benefit of the Chinese Patent Application No. 202311249091.8 filed on September 26, 2023, the disclosure of which is incorporated herein by reference in its entirety.

### FIELD

The present disclosure relates to the technical field of interaction, and in particular to an information presentation method and apparatus, an electronic device and a storage medium.

### BACKGROUND

With the continuous development of the live video technology, people have increasingly diversified demands for related functions of live streaming rooms, especially live streaming page presentation modes, presentation content and the like, which are closely related to the viewing experience of people.

Therefore, how to satisfy diversified presentation requirements of users for live streaming pages so as to improve the viewing experience of the users is an urgent problem to be solved at present.

### SUMMARY

In order to solve the above technical problems or at least partially solve the above technical problems, the present disclosure provides an information presentation method and apparatus, an electronic device and a storage medium.

In a first aspect, the present disclosure provides an information presentation method, including:
presenting a target page, wherein the target page includes an object detail presentation area and a candidate object set presentation area, and the candidate object set presentation area is used for presenting first abstract information of each candidate object in a candidate object set; and
in response to a selection operation for one piece of first abstract information in the candidate object set presentation area, presenting detail information of a first target object in the object detail presentation area, wherein the first target object is a candidate object corresponding to the selected first abstract information.

In a second aspect, the present disclosure further provides an information presentation apparatus, including:
a presentation module, configured to present a target page, wherein the target page includes an object detail presentation area and a candidate object set presentation area, and the candidate object set presentation area is used for presenting first abstract information of each candidate object in a candidate object set; and
an update module, configured to: in response to a selection operation for one piece of first abstract information in the candidate object set presentation area, present detail information of a first target object in the object detail presentation area, wherein the first target object is a candidate object corresponding to the selected first abstract information.

In a third aspect, the present disclosure further provides an electronic device, including:
one or more processors; and
a storage, configured to store one or more programs, wherein,
when the one or more programs are executed by one or more processors, the one or more processors are caused to implement the information presentation method as described above.

In a fourth aspect, the present disclosure further provides a computer-readable storage medium, storing a computer program thereon, wherein the program, when executed by a processor, implements the information presentation method as described above.

Compared with the prior art, the technical solutions provided in the embodiments of the present disclosure have the following advantages:

The technical solutions provided in the embodiments of the present disclosure include: presenting a target page, wherein the target page includes an object detail presentation area and a candidate object set presentation area, and the candidate object set presentation area is used for presenting first abstract information of each candidate object in a candidate object set; and in response to a selection operation for one piece of first abstract information in the candidate object set presentation area, presenting detail information of a first target object in the object detail presentation area, wherein the first target object is a candidate object corresponding to the selected first abstract information. Since the target page includes the object detail presentation area and the candidate object set presentation area, it means that the object detail presentation area and the candidate object set presentation area may be simultaneously presented in a display page of a terminal, so that when a user wishes to switch an object presented in the object detail presentation area, content presented in the object detail presentation area may be switched by selecting the first abstract information in the candidate object set presentation area without hiding the object detail presentation area, therefore the operation steps of browsing the detail information of different objects can be simplified, and the operation time consumption can be shortened.

### BRIEF DESCRIPTION OF THE DRAWINGS

The drawings herein are incorporated in and constitute a part of the present specification, illustrate embodiments conforming to the present disclosure, and are intended to explain the principles of the present disclosure together with the specification.

To illustrate technical solutions in the embodiments of the present disclosure or in the prior art more clearly, a brief introduction on the drawings which are needed in the description of the embodiments or the prior art is given below. Apparently, for those ordinary skilled in the art, other drawings may also be obtained according to these drawings without any creative effort.
FIG. 1 is a flowchart of an information presentation method provided in an embodiment of the present disclosure;
FIGS. 2-12 are schematic diagrams of several display pages of a terminal provided in the present disclosure;
FIG. 13 is a schematic structural diagram of an information presentation apparatus in an embodiment of the present disclosure; and
FIG. 14 is a schematic structural diagram of an electronic device in an embodiment of the present disclosure.

### DETAILED DESCRIPTION OF EMBODIMENTS

In order to understand the above objectives, features and advantages of the present disclosure more clearly, the solutions of the present disclosure will be further described below. It should be noted that, in the case of no conflict, embodiments of the present disclosure and features in the embodiments may be combined with each other.

In the following description, numerous specific details are set forth to fully understand the present disclosure, but the present disclosure may also be implemented in other manners different from those described herein; and obviously, the embodiments in the specification are only a part, but not all, of the embodiments of the present disclosure.

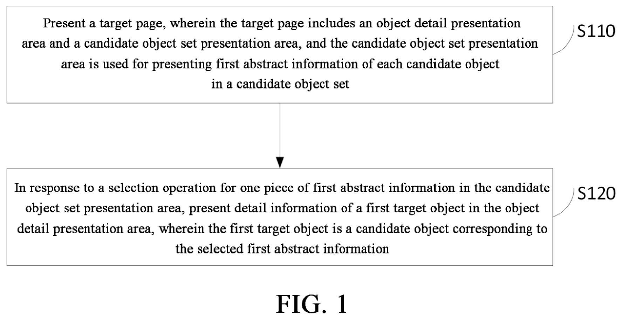

FIG. 1 is a flowchart of an information presentation method provided in an embodiment of the present disclosure, the present embodiment may be applied to a case where information presentation is performed in a client, the method may be executed by an information presentation apparatus, the apparatus may be implemented by using software and/or hardware, the apparatus may be configured in an electronic device, for example, a terminal, specifically including, but not limited to, a smart phone, a palmtop computer, a tablet computer, a wearable device with a display screen, a desktop computer, a notebook computer, an all-in-one machine, a smart home device, etc.

As shown in FIG. 1, the method may specifically include:
S110: a target page is presented, wherein the target page includes an object detail presentation area and a candidate object set presentation area, and the candidate object set presentation area is used for presenting first abstract information of each candidate object in a candidate object set.

An object may be, for example, something that is intended to be presented to a user. In some embodiments, in an e-commerce scenario, the object may be, for example, a commodity. Specifically, the object may be an item or a service.

The object includes a variety of attributes. The attributes of the object may be, for example, features that the object owns due to its own construction, composition, and the like. If the object is an item, the attributes of the object include name, brand, category, style, size, material, function, trademark, type, price, color, package and the like of the object. If the object is a service, the attributes thereof are content, brand, category, matters needing attention, price and the like included in the object.

The candidate object may be, for example, a pre-specified object, or an object screened out from an object library according to a preset screening condition. The object library is a pre-specified set composed of a plurality of objects.

The first abstract information of the candidate object may be, for example, a set composed of a part of attribute information of the candidate object. The first abstract information of the candidate object is used for schematically presenting general situations of the candidate object to the user in the form of text and/or images. In the e-commerce scenario, the first abstract information of the candidate object may be understood as a commodity card of the candidate object.

The candidate object set presentation area may be, for example, a presentation area in the target page used for presenting the first abstract information of the candidate objects in summary.

The detail information of the object includes all attribute information of the object. The object detail presentation area may be, for example, an area in the target page used for presenting all attribute information of a certain object.

The target page may be, for example, a pre-specified page. The target page specifically referring to what kind of page is not limited in the present application, as long as it includes the object detail presentation area and the candidate object set presentation area.

S120: in response to a selection operation for one piece of first abstract information in the candidate object set presentation area, detail information of a first target object is presented in the object detail presentation area, wherein the first target object is a candidate object corresponding to the selected first abstract information.

The selection operation for one piece of first abstract information in the candidate object set presentation area may be, for example, an operation for expressing the user wishes to check the detail information of which candidate object. The selection operation for the first abstract information may be, for example, a click operation for the first abstract information.

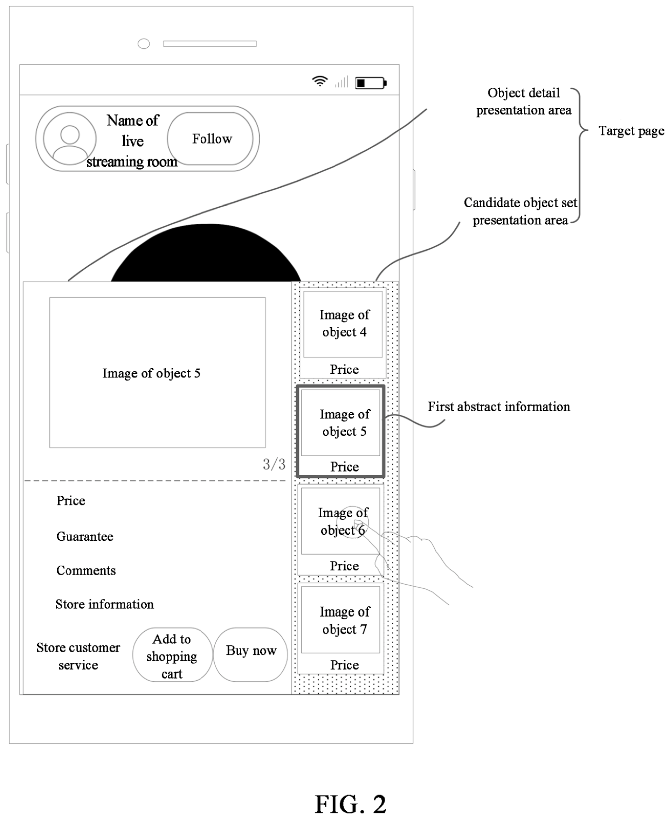

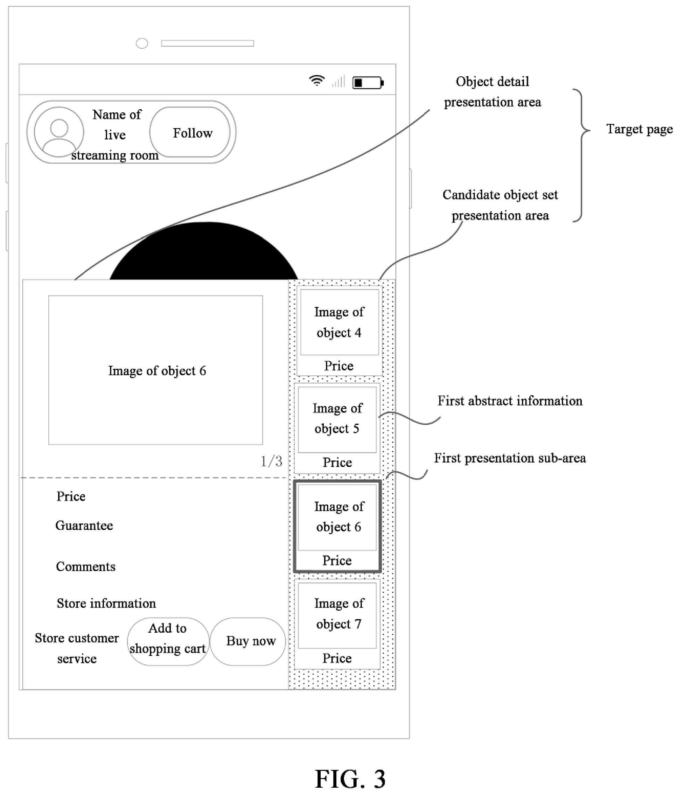

For example, referring to FIG. 2, in an initial state, the detail information of an object 5 is presented in the object detail presentation area in the target page. The candidate object set presentation area includes the first abstract information of an object 4, the object 5, an object 6 and an object 7. If the user selects the first abstract information of the object 6, referring to FIG. 3, the detail information of the object 6 is presented in the object detail presentation area.

The above technical solution includes: presenting a target page, wherein the target page includes an object detail presentation area and a candidate object set presentation area, and the candidate object set presentation area is used for presenting first abstract information of each candidate object in a candidate object set; and in response to a selection operation for one piece of first abstract information in the candidate object set presentation area, presenting detail information of a first target object in the object detail presentation area, wherein the first target object is a candidate object corresponding to the selected first abstract information. Since the target page includes the object detail presentation area and the candidate object set presentation area, it means that the object detail presentation area and the candidate object set presentation area may be simultaneously presented in a display page of a terminal, so that when the user wises to switch an object presented in the object detail presentation area, content presented in the object detail presentation area may be switched by selecting the first abstract information in the candidate object set presentation area without hiding the object detail presentation area, therefore the operation steps of browsing the detail information of different objects can be simplified, and the operation time consumption can be shortened.

Based on the above technical solution, S110 may be performed by a plurality of implementations, which is not limited in the present application. For example, in one embodiment, the implementation of S110 includes: presenting a live streaming room presentation page, wherein the live streaming room presentation page includes a summarized object presentation page, the live streaming room presentation page corresponds to an alternative object set, and the summarized object presentation page is used for presenting second abstract information of each alternative object in the alternative object set; and presenting the target page in response to a selection operation for one piece of second abstract information in the summarized object presentation page, wherein detail information of a second target object is presented in the object detail presentation area in the target page, and the second target object is an alternative object corresponding to the selected second abstract information.

The live streaming room presentation page refers to a page for reflecting content that is under live stream in the live streaming room. For example, the live streaming room presentation page may be, for example, a page for playing a live video in a case of entering a live streaming room.

"The live streaming room presentation page corresponding to the alternative object set" may be, for example, an alternative object in the alternative object set corresponding to the live streaming room presentation page is presented to the user by the live streaming room presentation page. In the e-commerce scenario, the alternative object is a commodity sold in the live streaming room. The alternative object set is a set composed of alternative objects.

Optionally, the candidate object set is a subset of the alternative object set, including two cases:
Case 1: the candidate object set and the alternative object set are completely the same set, that is, each alternative object may be used as a candidate object. Each candidate object may be used as an alternative object.
Case 2: the candidate object set is a proper subset of the alternative object set, that is, a part of alternative objects in the alternative object set may be used as candidate objects, and the other part of alternative objects cannot be used as candidate objects. All candidate objects in the candidate object set may be used as alternative objects.

If the candidate object set is the proper subset of the alternative object set, optionally, a candidate object is determined from the alternative object set based on a preset screening condition; and the determined candidate object is added into the candidate object set.

The preset screening condition may be, for example, a judging basis for judging whether one alternative object may be used as a candidate object.

The content that the preset screening condition specifically refers to is not limited in the present application. For example, the state of the alternative object includes a selectable state or a non-selectable state. In the e-commerce scenario, the selectable state may be, for example, a purchasable state. The non-selectable state may be, for example, a non-purchasable state. For example, the non-selectable state may include, for example, a snapped-up state, an off-shelf state and a state presented as a lottery prize, and the like. The preset screening condition includes that the object is in the selectable state.

The summarized object presentation page may be, for example, a page for presenting second abstract information of each alternative object in the alternative object set. Optionally, the summarized object presentation page may be a commodity list presented after a "shopping cart" option in the live streaming room presentation page is clicked on.

The second abstract information of the alternative object may be a set composed of a part of attribute information of the alternative object. The second abstract information of the alternative object is used for schematically presenting the general situations of the alternative object to the user in the form of text and/or images. In the e-commerce scenario, the second abstract information of the alternative object may be understood as a commodity card of the alternative object.

The selection operation for one piece of second abstract information in the summarized object presentation page may be, for example, an operation for expressing the user wishes to check the detail information of which alternative object. The selection operation for the second abstract information may be, for example, a click operation for the second abstract information.

The second target object is an alternative object that the user wishes to check.

Optionally, if one object is both an alternative object and a candidate object, for the object, the object detail presentation area, the second abstract information and the first abstract information are sequentially arranged in a descending order of information amounts of the presented attribute information. For example, an image, a name, a price, a guarantee, a store name, an evaluation, selling point information and the like of the object are presented in the object detail presentation area. The second abstract information includes the image, the name, the price, the selling point information and the like of the object. The first abstract information includes only the image and the price.

In practice, optionally, "presenting the target page in response to the selection operation for one piece of second abstract information in the summarized object presentation page" includes: directly presenting the target page in response to the selection operation for one piece of second abstract information in the summarized object presentation page.

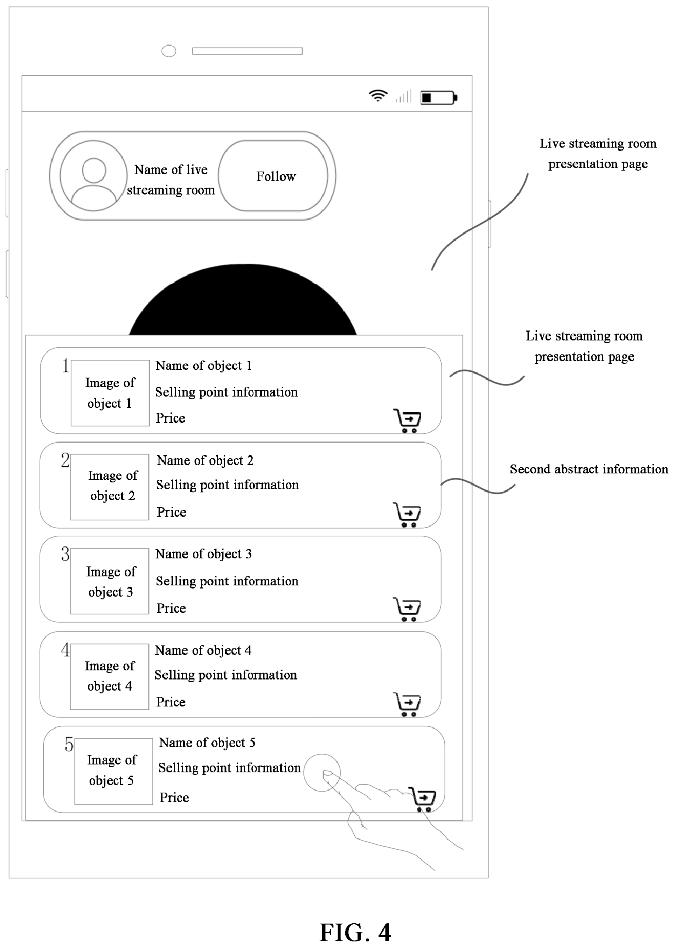

For example, referring to FIG. 4, the live streaming room presentation page includes the summarized object presentation page; and the second abstract information of a plurality of alternative objects is presented in the summarized object presentation page. If the user selects the second abstract information of the object 5, the object 5 is the second target object. Referring to FIG. 2, the target page is presented, the target page includes the object detail presentation area and the candidate object set presentation area, and the detail information of the object 5 is presented in the object detail presentation area in the target page.

Alternatively, "presenting the target page in response to the selection operation for one piece of second abstract information in the summarized object presentation page" includes: presenting an object detail page in response to the selection operation for one piece of second abstract information in the summarized object presentation page, wherein the object detail page is used for presenting the detail information of the second target object; and presenting the target page, if a browsing depth of the object detail page meets a preset depth condition and/or a first preset trigger operation for the object detail page is received.

The browsing depth is information for reflecting the browsing situation of the object detail page by a user. For example, the browsing depth of the object detail page includes a duration of presenting the object detail page by a terminal, or a ratio of an information amount that has been presented by the terminal via the object detail page to the total information amount.

The preset depth condition may be, for example, a judgment standard for determining whether to present the target page. In practice, if the browsing depth of the object detail page meets the preset depth condition, it means that the user has learned about a part of information of the second target object via the object detail page.

The content that the preset depth condition specifically includes is not limited in the present application. In practice, the preset depth condition may be set according to the content that the browsing depth specifically refers to.

In one example, the object detail page includes an image presentation area; the second target object includes at least two pieces of image information; and the preset depth condition includes that the image information being presented in the image presentation area currently is the last piece of image information in the at least two pieces of image information. That is, the preset depth condition is that a last image corresponding to the second target object is being presented in the image presentation area currently.

In the e-commerce scenario, if the second target object is a commodity, the image presentation area may be a main image presentation area, and the image information may be a picture or a video and the like of the commodity.

The first preset trigger operation for the object detail page may be, for example, a click operation for a specific area or control on the object detail page, or a sliding operation in a specific area, etc.

For example, it is configured that if the browsing depth of the object detail page meets the preset depth condition, and the first preset trigger operation for the object detail page is received, the target page is presented. The preset depth condition includes that the image information being presented in the image presentation area currently is the last piece of image information in the at least two pieces of image information, and the first preset trigger operation is pressing the object detail page and sliding to the left.

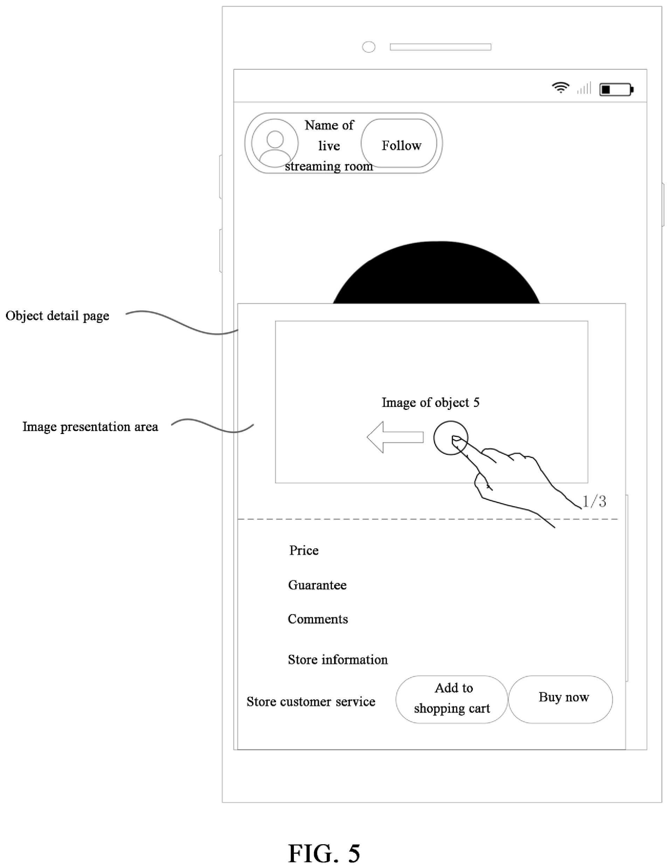

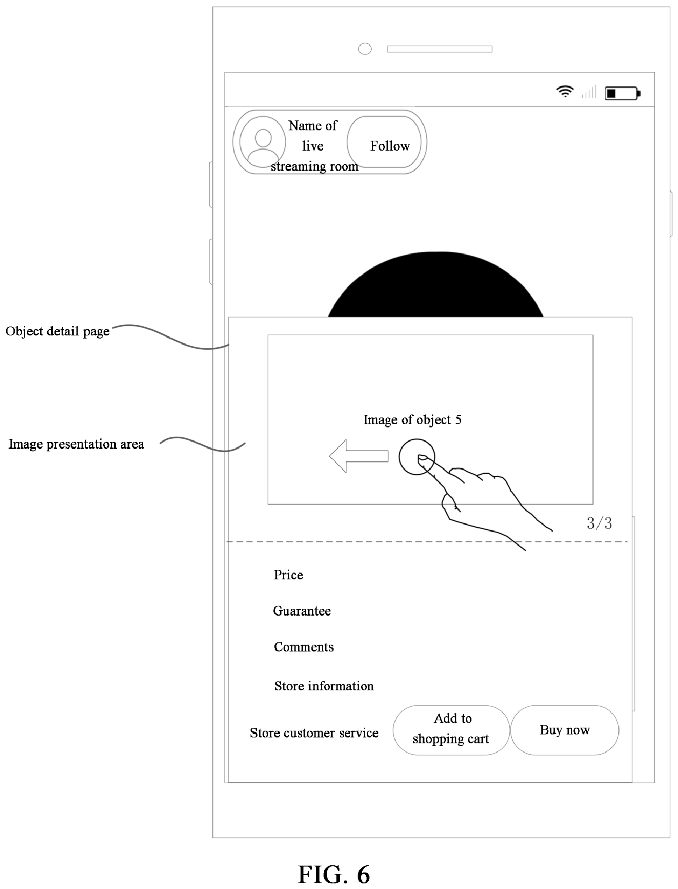

For example, referring to FIG. 4, the live streaming room presentation page includes the summarized object presentation page; and the second abstract information of a plurality of alternative objects is presented in the summarized object presentation page. If the user selects the second abstract information of the object 5, the object 5 is the second target object. Referring to FIG. 5, the object detail page is presented. The detail information of the object 5 is presented in the object detail page. The object detail page includes the image presentation area, and a number identifier is presented in a lower right corner of the image presentation area. The form of the number identifier is "n/m", wherein n indicates that the nth piece of image information corresponding to the second target object is presented in the image presentation area currently, and m indicates the total number of image information of the second target object. In FIG. 5, the number identifier is expressed as "1/3", which indicates that the second target object has three pieces of image information in total, the first piece of image information is being presented in the image presentation area currently, and thus the preset depth condition is not met. With continued reference to FIG. 5, if the user presses the image presentation area and then slides it leftwards, the number identifier becomes "2/3", the second piece of image information of an object 2 is presented in the image presentation area, but this case still cannot meet the preset depth condition. When the user presses the image presentation area again and then slides it leftwards, referring to FIG. 6, the number identifier becomes "3/3", the last piece of image information of the object 2 is presented in the image presentation area, and at this time, the preset depth condition is met. When the user presses the image presentation area again and then slides it leftwards, referring to FIG. 2, the target page is presented.

Based on FIG. 6, when the user presses the image presentation area and then slides it leftwards, the number identifier becomes "2/3", and the second piece of image information of the object 2 is presented in the image presentation area.

Based on the above technical solutions, in addition to the first target object, the remaining candidate objects in the candidate object set are non-first target objects; in the candidate object set presentation area, the first abstract information of the first target object is in a selected state; and the first abstract information of the non-first target objects is in a non-selected state.

The presentation effect of the first abstract information in the selected state is different from the presentation effect of the first abstract information in the non-selected state. In this way, the user can intuitively and quickly determine which first abstract information in the candidate object set presentation area is the first abstract information of the first target object.

In order to make the presentation effect of the first abstract information in the selected state be different from the presentation effect of the first abstract information in the non-selected state, in practice, one of the following manners may be taken: a background color of the first abstract information in the selected state is different from a background color of the first abstract information in the non-selected state; a text color of the first abstract information in the selected state is different from a text color of the first abstract information in the non-selected state; and a border color of the first abstract information in the selected state is different from a border color of the first abstract information in the non-selected state.

Further, the candidate object set presentation area includes a first presentation sub-area, and the first abstract information of the first target object is presented at a preset position in the first presentation sub-area; and the preset position includes one of the following: a first presentation position and an intermediate presentation position.

If the first abstract information of the first target object is presented at the first presentation position in the first presentation sub-area, the user may be further assisted in quickly finding the first abstract information of the first target object.

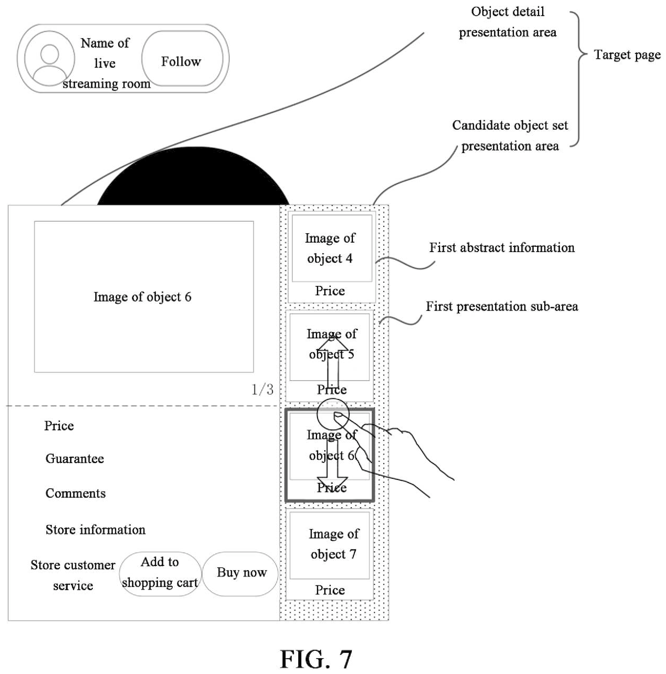

Referring to FIG. 7, in the candidate object set presentation area, the first target object is the object 6, and in addition to the first abstract information of the object 6, the first abstract information of the object 4, the object 5 and the object 7 is also presented in the first presentation sub-area. The first abstract information of the object 4 and the object 5 is located above the first abstract information of the object 6, and the first abstract information of the object 7 is located below the first abstract information of the object 6. That is, the first abstract information of the object 6 is presented at the intermediate presentation position in the first presentation sub-area. In this way, the user can understand that the first abstract information of other candidate objects is located above and below the first abstract information of the object 6. The object 6 is neither the first object nor the last object presented in the candidate object set presentation area, so as to inspire the user to perform a switching operation on the first abstract information in the first presentation sub-area.

On this basis, optionally, if the number of pieces of first abstract information that the first presentation sub-area may accommodate is less than the number of candidate objects in the candidate object set, the method further includes: in response to a switching operation for the first abstract information in the first presentation sub-area, switching the first abstract information presented in the first presentation sub-area.

The switching operation for the first abstract information in the first presentation sub-area may be, for example, a sliding operation in a preset direction (e.g., an upward direction or a downward direction) in the first presentation sub-area; or a selection operation on a control or an option for switching the first abstract information presented in the first presentation sub-area.

For example, it is assumed that the candidate object set includes 20 candidate objects in total. The first presentation sub-area may accommodate four pieces of first abstract information. Referring to 7, at a certain moment, the first abstract information of the object 4, the object 5, the object 6 and the object 7 is being presented in the first presentation sub-area. When it is detected that the user presses the first presentation sub-area and slides it upwards, the first abstract information presented in the first presentation sub-area is switched, For example, after the switching, the first abstract information of an object 8, an object 9, an object 10 and an object 11 is presented in the first presentation sub-area, and the first abstract information of the object 4, the object 5, the object 6 and the object 7 is no longer presented. When it is detected that the user presses the first presentation sub-area and slides it downwards, the first abstract information presented in the first presentation sub-area is switched, For example, after the switching, the first abstract information of an object 1, the object 2, the object 3 and the object 4 is presented in the first presentation sub-area, and the first abstract information of the object 5 and the object 6 is no longer presented.

Based on the above technical solutions, optionally, if one alternative object in the alternative object set is in an in-explanation state, the candidate object set presentation area further includes first abstract information of the alternative object in the in-explanation state. In a live streaming scenario, a live streamer explains the alternative objects one by one. The alternative object that the live streamer is explaining is in the in-explanation state. The alternative object in the in-explanation state may be in the candidate object set, and may also be not in the candidate object set, which is not limited in the present application.

Since the candidate object set presentation area further includes the first abstract information of the alternative object in the in-explanation state, the user can find, in the candidate object set presentation area, the first abstract information of the alternative object in the in-explanation state, thereby enabling the user to check the attribute information of the candidate object in the in-explanation state.

Further, the candidate object set presentation area includes a first presentation sub-area and a second presentation sub-area, the first presentation sub-area is used for presenting the first abstract information of the candidate objects; the second presentation sub-area is used for presenting the first abstract information of the alternative object in the in-explanation state; and the second presentation sub-area is located above the first presentation sub-area.

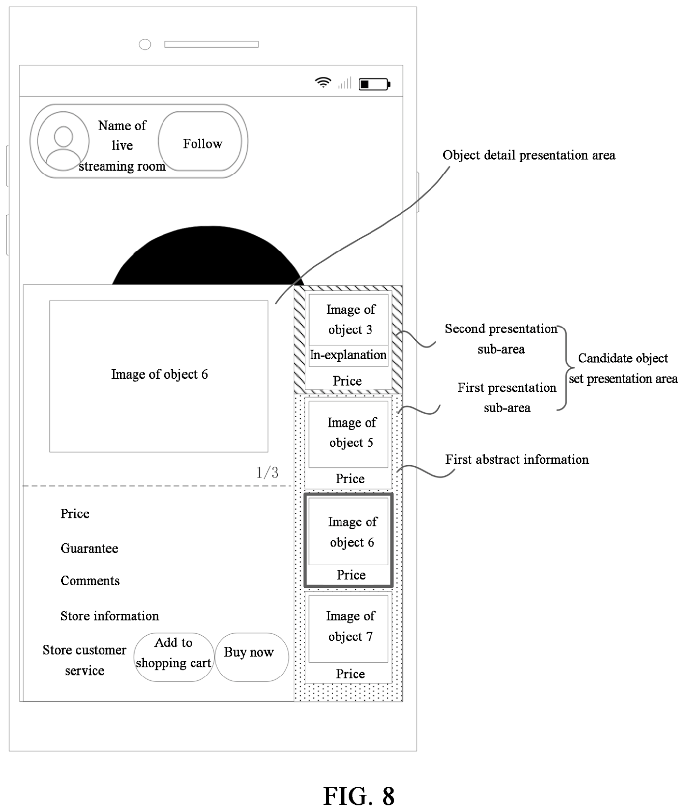

For example, referring to FIG. 8, it is assumed that the alternative object in the in-explanation state is an object 3. The first abstract information of the object 3 is presented in the second presentation sub-area, and the second presentation sub-area is located above the first presentation sub-area. In this way, the user can conveniently and quickly find the first abstract information of the alternative object in the in-explanation state.

In practice, if there is no alternative object in the in-explanation state, optionally, as shown in FIG. 7, the second presentation sub-area is hidden.

In FIG. 2, FIG. 3, FIG. 7 and FIG. 8, in the target page, the object detail presentation area and the candidate object set presentation area are arranged side by side in a horizontal direction, which is merely a specific example of the present application and is not intended to limit the present application. In practice, the object detail presentation area and the candidate object set presentation area may also be arranged in a vertical direction, or in other manners.

Based on the above technical solutions, optionally, after S110, the method further includes: in response to a first size adjustment instruction, increasing the size of the object detail presentation area in a first direction, and reducing the size of the candidate object set presentation area in the first direction; and in response to a second size adjustment instruction, reducing the size of the object detail presentation area in the first direction, and increasing the size of the candidate object set presentation area in the first direction.

The first size adjustment instruction may be, for example, an instruction for indicating that the user wishes to increase the size of the object detail presentation area or an instruction for indicating that the user wishes to reduce the size of the candidate object set presentation area. In practice, optionally, the first size adjustment instruction is generated in response to a second preset trigger operation for the object detail presentation area, or in response to a third preset trigger operation for the candidate object set presentation area. The second preset trigger operation for the object detail presentation area may be, for example, a drag operation for an edge line of the object detail presentation area, an operation of sliding in a preset direction or a preset trajectory in the object detail presentation area, or an operation of clicking on or dragging a control for size adjustment in the object detail presentation area. The third preset trigger operation for the candidate object set presentation area may be, for example, a drag operation for an edge line of the candidate object set presentation area, an operation of sliding in a preset direction or a preset trajectory in the candidate object set presentation area, or an operation of clicking on or dragging a control for size adjustment in the candidate object set presentation area.

The first direction may be a pre-specified direction, such as the horizontal direction, the vertical direction, or a direction having a preset included angle with the horizontal direction.

Similarly, the second size adjustment instruction may be, for example, an instruction for indicating that the user wishes to reduce the size of the object detail presentation area or an instruction for indicating that the user wishes to increase the size of the candidate object set presentation area. In practice, optionally, the second size adjustment instruction is generated in response to a fourth preset trigger operation for the object detail presentation area, or in response to a fifth preset trigger operation for the candidate object set presentation area. The fourth preset trigger operation for the object detail presentation area may be, for example, a drag operation for an edge line of the object detail presentation area, an operation of sliding in a preset direction or a preset trajectory in the object detail presentation area, or an operation of clicking on a control in the object detail presentation area. The fifth preset trigger operation for the candidate object set presentation area may be, for example, a drag operation for an edge line of the candidate object set presentation area, an operation of sliding in a preset direction or a preset trajectory in the candidate object set presentation area, or an operation of clicking on a control for size adjustment in the candidate object set presentation area.

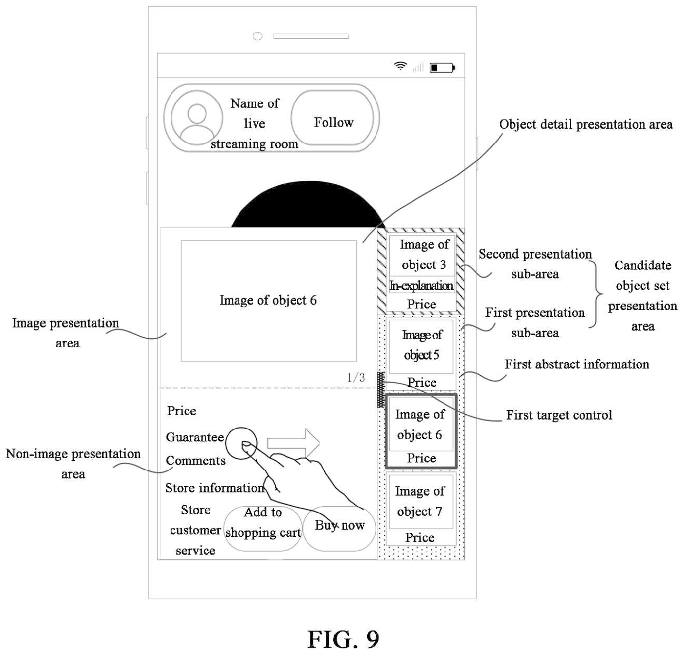

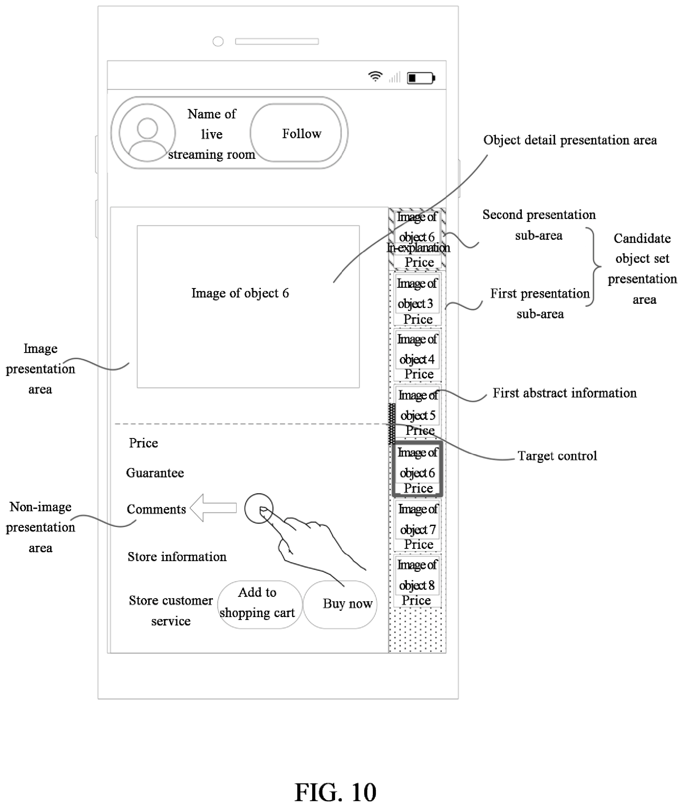

For example, referring to FIG. 9, a target control is provided in the vicinity of a boundary line of the object detail presentation area and the candidate object set presentation area, and the target control may be used for adjusting the size of the object detail presentation area and the size of the candidate object set presentation area. When the user presses the target control and then slides it rightwards (i.e., performing a rightward drag operation on the target control), or when the user presses a non-image presentation area in the object detail presentation area and then slides it rightwards in the object detail presentation area, referring to FIG. 10, the size of the object detail presentation area in the horizontal direction is increased, and meanwhile the size of the candidate object set presentation area in the horizontal direction is reduced.

Referring to FIG. 10, the target control is also provided in the vicinity of the boundary line of the object detail presentation area and the candidate object set presentation area, and the target control may be used for adjusting the size of the object detail presentation area and the size of the candidate object set presentation area. When the user presses the target control and then slides it leftwards (i.e., performing a leftward drag operation on the target control), or when the user presses the non-image presentation area in the object detail presentation area and then slides it leftwards in the object detail presentation area, referring to FIG. 9, the size of the object detail presentation area in the horizontal direction is reduced, and meanwhile the size of the candidate object set presentation area in the horizontal direction is increased.

By increasing the size of the object detail presentation area in the first direction and reducing the size of the candidate object set presentation area in the first direction, and reducing the size of the object detail presentation area in the first direction and increasing the size of the candidate object set presentation area in the first direction, the display page of the terminal may be fully utilized, thereby improving the user experience.

Further, in response to the first size adjustment instruction, increasing the size of the object detail presentation area in the first direction, and reducing the size of the candidate object set presentation area in the first direction, includes: in response to the first size adjustment instruction, estimating the size of the increased object detail presentation area in the first direction to obtain an estimation result; if the estimation result is less than or equal to a preset size threshold value, increasing the size of the object detail presentation area in the first direction, and reducing the size of the candidate object set presentation area in the first direction; and if the estimation result is greater than the preset size threshold value, presenting the object detail presentation area and hiding the candidate object set presentation area.

The preset size threshold value is a preset judgment standard for determining whether the candidate object set presentation area needs to be hidden. If the estimation result is greater than the preset size threshold value, it means that a remaining area in the screen of the terminal other than an area occupied by the object detail presentation area is relatively small, if the candidate object set presentation area is presented in the remaining area, since the presentation area of each piece of first abstract information is very small, the experience of the user viewing the first abstract information is poor, and therefore the candidate object set presentation area is hidden.

Optionally, after the candidate object set presentation area is hidden, the target page has the same structure as the summarized object presentation page. That is, the target page only includes the object detail page for presenting the detail information of objects. Optionally, if the estimation result is greater than the preset size threshold value, the object detail presentation area occupies the entire screen, that is, the object detail presentation area of the target page is presented in a full-screen manner.

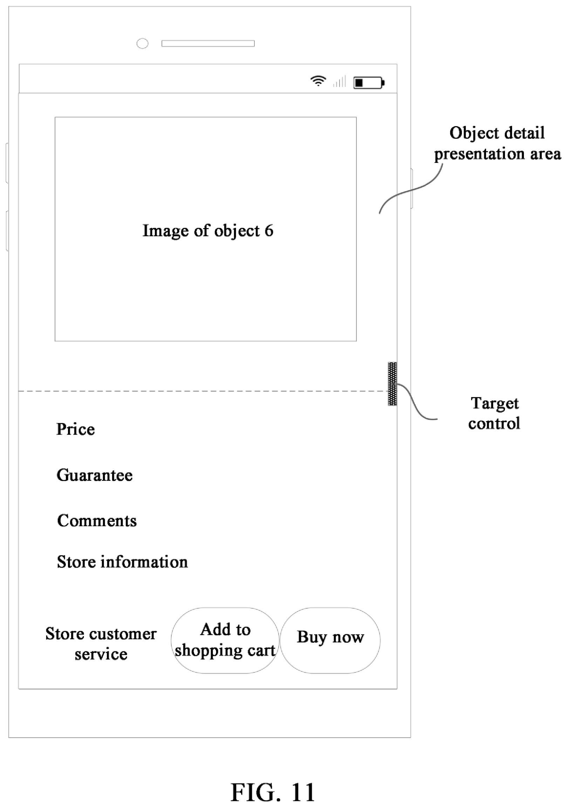

For example, assuming that the preset size threshold value is 343px, referring to FIG. 9, when the user presses the target control and then slides it rightwards (i.e., performing a rightward drag operation on the target control), or when the user presses the non-image presentation area in the object detail presentation area and then slides it rightwards in the object detail presentation area, the size of the increased object detail presentation area in the horizontal direction is estimated at first. Assuming that the estimation result is 340px, since 340px is less than 343px, referring to FIG. 10, the size of the object detail presentation area in the horizontal direction is increased, and meanwhile the size of the candidate object set presentation area in the horizontal direction is reduced. Assuming that the estimation result is 350px, since 350px is greater than 343px, referring to FIG. 11, the size of the object detail presentation area in the horizontal direction is increased until the object detail presentation area occupies the entire screen.

Based on the above technical solutions, optionally, after S110, the method further includes: hiding the candidate object set presentation area in response to a hiding instruction for the candidate object set; and unfolding the candidate object set presentation area in response to an unfolding instruction for the candidate object set.

The hidden instruction may be, for example, an instruction for indicating that the user wishes to hide the presentation area of the candidate object set. Optionally, the hiding instruction is generated in response to a sixth preset trigger operation for the object detail presentation area or a seventh preset trigger operation for the candidate object set presentation area. The sixth preset trigger operation for the object detail presentation area may be, for example, an operation of clicking on a control for hiding the candidate object set presentation area in the object detail presentation area or a sliding operation in the object detail presentation area in a preset direction. The seventh preset trigger operation for the candidate object set presentation area may be, for example, an operation of clicking on a control for hiding the candidate object set presentation area in the candidate object set presentation area or a sliding operation in the candidate object set presentation area in a preset direction.

The unfolding instruction may be, for example, an instruction for indicating that the user wishes to present the candidate object set presentation area. Optionally, the unfolding instruction is generated in response to an eighth preset trigger operation, and the eighth preset trigger operation may be, for example, an operation of clicking a control for unfolding the candidate object set presentation area, or a sliding instruction in a preset direction, etc.

For example, with continued reference to FIG. 9, the target control further has a function of hiding or presenting the candidate object set presentation area. When the user clicks on the target control, or the user presses the non-image presentation area in the object detail presentation area and then slides it rightwards until it slides to an edge line of the target page (i.e., the edge of a display screen), referring to FIG. 11, the candidate object set presentation area is hidden, only the object detail presentation area is presented, and the object detail presentation area occupies the entire screen.

In the case of FIG. 11, when the user clicks on the target control again, or the user presses a right edge of the object detail presentation area and then slides it leftwards, referring to FIG. 9, the candidate object set presentation area is unfolded.

By hiding the candidate object set presentation area in response to the hiding instruction for the candidate object set, and unfolding the candidate object set presentation area in response to the unfolding instruction for the candidate object set, the user may be allowed to quickly fold or present the candidate object set presentation area as needed.

Based on the above technical solutions, optionally, in a case where the live streaming room presentation page and the target page are presented at the same time, in response to a trigger operation for the live streaming room presentation page, presenting the summarized object presentation page, and stopping presenting the target page.

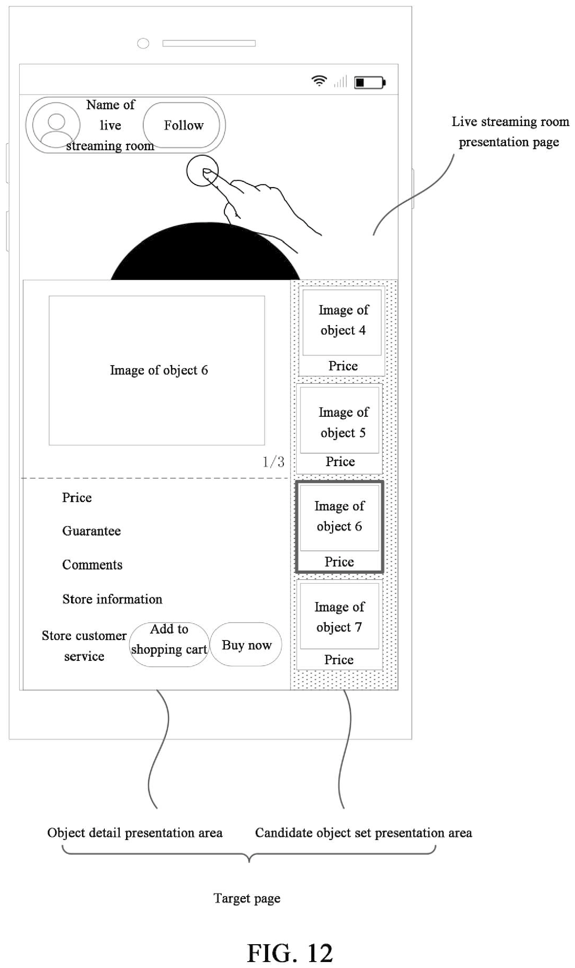

For example, referring to FIG. 12, if the user clicks on an area that is not shielded by the target page in the live streaming room presentation page, referring to FIG. 4, the summarized object presentation page is presented, and the presentation of the target page is stopped.

It should be noted that for the simplicity of description, the foregoing method embodiments are expressed as a series of action combinations, but those skilled in the art should know that the present invention is not limited by the described action sequence, because some steps may be performed in other sequences or at the same time according to the present invention. In addition, those skilled in the art should also know that the embodiments described in the specification are all preferred embodiments, and the involved actions and modules are not necessarily required by the present invention.

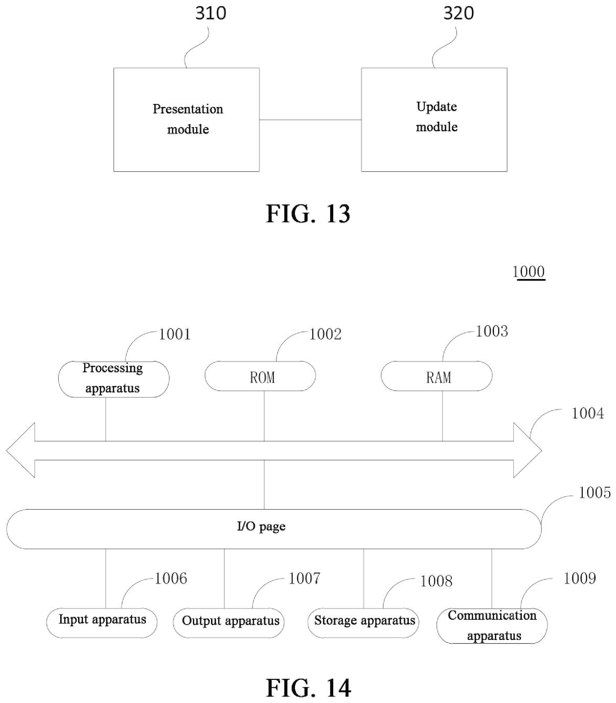

FIG. 13 is a schematic structural diagram of an information presentation apparatus in an embodiment of the present disclosure. The information presentation apparatus provided in the embodiment of the present disclosure may be configured in a client. Referring to FIG. 6, the information presentation apparatus specifically includes:
a presentation module 310, configured to present a target page, wherein the target page includes an object detail presentation area and a candidate object set presentation area, and the candidate object set presentation area is used for presenting first abstract information of each candidate object in a candidate object set; and
an update module 320, configured to: in response to a selection operation for one piece of first abstract information in the candidate object set presentation area, present detail information of a first target object in the object detail presentation area, wherein the first target object is a candidate object corresponding to the selected first abstract information.

Further, the presentation module 310 is configured to present a live streaming room presentation page, wherein the live streaming room presentation page includes a summarized object presentation page, the live streaming room presentation page corresponds to an alternative object set, and the summarized object presentation page is used for presenting second abstract information of each alternative object in the alternative object set; and
present the target page in response to a selection operation for one piece of second abstract information in the summarized object presentation page, wherein detail information of a second target object is presented in the object detail presentation area in the target page, and the second target object is an alternative object corresponding to the selected second abstract information.

Further, the presentation module 310 is configured to present an object detail page in response to the selection operation for one piece of second abstract information in the summarized object presentation page, wherein the object detail page is used for presenting the detail information of the second target object; and
present the target page if a browsing depth of the object detail page meets a preset depth condition and/or a first preset trigger operation for the object detail page is received, wherein the browsing depth is information for reflecting the browsing situation of the object detail page by a user.

Further, the object detail page includes an image presentation area; the second target object includes at least two pieces of image information; and the preset depth condition includes that the image information being presented in the image presentation area currently is the last piece of image information in the at least two pieces of image information.

Further, the candidate object set is a subset of the alternative object set.

Further, in addition to the first target object, the remaining candidate objects in the candidate object set are non-first target objects; in the candidate object set presentation area, the first abstract information of the first target object is in a selected state; and the first abstract information of the non-first target objects is in a non-selected state.

The candidate object set presentation area includes a first presentation sub-area, and the first abstract information of the first target object is presented at a preset position in the first presentation sub-area; and the preset position includes one of the following: a first presentation position and an intermediate presentation position.

Further, if the number of pieces of first abstract information that the first presentation sub-area may accommodate is less than the number of candidate objects in the candidate object set, the apparatus further includes a switching module, configured to:
in response to a switching operation for the first abstract information in the first presentation sub-area, switch the first abstract information presented in the first presentation sub-area.

Further, one alternative object in the alternative object set is in an in-explanation state; the candidate object set presentation area further includes first abstract information of the alternative object in the in-explanation state; and
the candidate object set presentation area includes a first presentation sub-area and a second presentation sub-area, the first presentation sub-area is used for presenting the first abstract information of the candidate objects; the second presentation sub-area is used for presenting the first abstract information of the alternative object in the in-explanation state; and the second presentation sub-area is located above the first presentation sub-area.

Further, the apparatus further includes an adjustment module, configured to: after presenting the target page, in response to a first size adjustment instruction, increase the size of the object detail presentation area in a first direction, and reduce the size of the candidate object set presentation area in the first direction; and
in response to a second size adjustment instruction, reduce the size of the object detail presentation area in the first direction, and increase the size of the candidate object set presentation area in the first direction.

Further, the adjustment module is configured to:
in response to the first size adjustment instruction, estimate the size of the increased object detail presentation area in the first direction to obtain an estimation result;
if the estimation result is less than or equal to a preset size threshold value, increase the size of the object detail presentation area in the first direction, and reduce the size of the candidate object set presentation area in the first direction; and
if the estimation result is greater than the preset size threshold value, present the object detail presentation area and hide the candidate object set presentation area.

Further, the apparatus further includes a control module, configured to: after presenting the target page, hide the candidate object set presentation area in response to a hiding instruction for the candidate object set; and
unfold the candidate object set presentation area in response to an unfolding instruction for the candidate object set.

The information presentation apparatus provided in the embodiments of the present disclosure may execute the steps executed by the client in the information presentation method provided in the method embodiments of the present disclosure, and has execution steps and beneficial effects, thus details are not described herein again.

FIG. 14 is a schematic structural diagram of an electronic device in an embodiment of the present disclosure. Specific reference is made to FIG. 14 below; it illustrates a structural schematic diagram of an electronic device 1000 suitable for implementing an embodiment of the present disclosure. The electronic device 1000 in the embodiment of the present disclosure may include, but is not limited to, mobile terminals such as mobile phones, notebook computers, digital broadcast receivers, PDAs (Personal Digital Assistants), PADs (Portable Android Devices), PMPs (Portable Multimedia Players), in-vehicle terminals (e.g., in-vehicle navigation terminals), wearable electronic devices and the like, and fixed terminals such as digital TVs, desktop computers, smart home devices, etc. The electronic device shown in FIG. 14 is merely an example and should not bring any limitation to the functions and use ranges of the embodiments of the present disclosure.

As shown in FIG. 14, the electronic device 1000 may include a processing apparatus (e.g., a central processing unit, a graphics processing unit, or the like) 1001, which may execute various suitable actions and processes in accordance with a program stored in a read-only memory (ROM) 1002 or a program loaded from a storage apparatus 1008 into a random access memory (RAM) 1003, so as to implement the information presentation method in the embodiments of the present disclosure. In the RAM 1003, various programs and data needed by the operations of the electronic device 1000 are also stored. The processing apparatus 1001, the ROM 1002 and the RAM 1003 are connected to each other via a bus 1004. An input/output (I/O) interface 1005 is also connected to the bus 1004.

In general, the following apparatuses may be connected to the I/O interface 1005: an input apparatus 1006, including, for example, a touch screen, a touch pad, a keyboard, a mouse, a camera, a microphone, an accelerometer, a gyroscope, and the like; an output apparatus 1007, including, for example, a liquid crystal display (LCD), a speaker, a vibrator, and the like; a storage apparatus 1008, including, for example, a magnetic tape, a hard disk, and the like; and a communication apparatus 1009. The communication apparatus 1009 may allow the electronic device 1000 to communicate in a wireless or wired manner with other devices to exchange data. Although FIG. 14 illustrates the electronic device 1000 having various apparatuses, it should be understood that not all illustrated apparatuses are required to be implemented or provided. More or fewer apparatuses may alternatively be implemented or provided.

In particular, according to the embodiments of the present disclosure, the processes described above with reference to the flowcharts may be implemented as computer software programs. For example, the embodiments of the present disclosure include a computer program product, which includes a computer program carried on a non-transitory computer-readable medium, and the computer program contains program codes for executing the method illustrated in the flowcharts, so as to implement the information presentation method as described above. In such embodiments, the computer program may be downloaded and installed from a network via the communication apparatus 1009, or installed from the storage apparatus 1008, or installed from the ROM 1002. When the computer program is executed by the processing apparatus 1001, the above functions defined in the database processing method of the embodiments of the present disclosure are executed.

It should be noted that, the computer-readable medium described above in the present disclosure may be either a computer-readable signal medium or a computer-readable storage medium, or any combination of the two. The computer-readable storage medium may be, for example, but is not limited to, an electrical, magnetic, optical, electromagnetic, infrared, or semiconductor system, apparatus or device, or a combination of any of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or a flash memory), an optical fiber, a compact disc read-only memory (CD-ROM), an optical storage device, a magnetic storage device, or any suitable combination of the above. In the present disclosure, the computer-readable storage medium may be any tangible medium that contains or stores a program that may be used by or in combination with an instruction execution system, apparatus or device. In the present disclosure, the computer-readable signal medium may include an information signal that is propagated in a baseband or used as part of a carrier, wherein the information signal carries computer-readable program codes. Such propagated information may take many forms, including, but not limited to, electromagnetic signals, optical signals, or any suitable combination thereof. The computer-readable signal medium may also be any computer-readable medium other than the computer-readable storage medium, and the computer-readable signal medium may send, propagate or transmit the program for use by or in combination with the instruction execution system, apparatus or device. Program codes contained on the computer-readable medium may be transmitted with any suitable medium, including, but not limited to: an electrical wire, an optical cable, RF (Radio Frequency), and the like, or any suitable combination thereof.

In some embodiments, a client and a server may perform communication by using any currently known or future-developed network protocol, such as an HTTP (HyperText Transfer Protocol), and may be interconnected with any form or medium of digital data communication (e.g., a communication network). Examples of the communication network include a local area network ("LAN"), a wide area network ("WAN"), an international network (e.g., the Internet), and a peer-to-peer network (e.g., an ad hoc peer-to-peer network), as well as any currently known or future-developed network.

The computer-readable medium may be contained in the above electronic device; and it may also be present separately and is not assembled into the electronic device.

The computer-readable medium carries one or more programs that, when executed by the electronic device, cause the electronic device to:
present a target page, wherein the target page includes an object detail presentation area and a candidate object set presentation area, and the candidate object set presentation area is used for presenting first abstract information of each candidate object in a candidate object set; and
in response to a selection operation for one piece of first abstract information in the candidate object set presentation area, present detail information of a first target object in the object detail presentation area, wherein the first target object is a candidate object corresponding to the selected first abstract information.

Optionally, when the one or more programs are executed by the electronic device, the electronic device may also execute other steps in the above embodiments.

Computer program codes for executing the operations of the present disclosure may be written in one or more programming languages or combinations thereof. The programming languages include, but are not limited to, object node-oriented programming languages, such as Java, Smalltalk, C++, and conventional procedural programming languages, such as the "C" language or similar programming languages. The program codes may be executed entirely on a user computer, executed partly on the user computer, executed as a stand-alone software package, executed partly on the user computer and partly on a remote computer, or executed entirely on the remote computer or a server. In the case involving the remote computer, the remote computer may be connected to the user computer through any type of network, including a local area network (LAN) or a wide area network (WAN), or it may be connected to an external computer (e.g., through the Internet using an Internet service provider).

The flowcharts and block diagrams in the drawings illustrate system architectures, functions and operations of possible implementations of systems, methods and computer program products according to various embodiments of the present disclosure. In this regard, each block in the flowcharts or block diagrams may represent a part of a module, a program segment, or a code, which contains one or more executable instructions for implementing specified logical functions. It should also be noted that, in some alternative implementations, the functions annotated in the blocks may occur out of the sequence annotated in the drawings. For example, two blocks shown in succession may, in fact, be executed substantially in parallel, or the blocks may sometimes be executed in a reverse sequence, depending upon the functions involved. It should also be noted that each block in the block diagrams and/or flowcharts, and combinations of the blocks in the block diagrams and/or flowcharts may be implemented by dedicated hardware-based systems for executing specified functions or operations, or combinations of dedicated hardware and computer instructions.

The units involved in the described embodiments of the present disclosure may be implemented in a software or hardware manner. The names of the units do not constitute limitations of the units themselves in a certain case.

The functions described herein above may be executed, at least in part, by one or more hardware logical components. For example, without limitation, example types of the hardware logical components that may be used include: a field programmable gate array (FPGA), an application specific integrated circuit (ASIC), an application specific standard product (ASSP), a system on chip (SOC), a complex programmable logic device (CPLD), and so on.

In the context of the present disclosure, a machine-readable medium may be a tangible medium, which may contain or store a program for use by or in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium would include an electrical connection based on one or more wires, a portable computer disk, a hard disk, a random access memory (RAM), a read-only memory (ROM), an erasable programmable read-only memory (EPROM or a flash memory), an optical fiber, a compact disc read-only memory (CD-ROM), an optical storage device, a magnetic storage device, or any suitable combination thereof.

According to one or more embodiments of the present disclosure, the present disclosure provides an electronic device, including:
one or more processors; and
a storage apparatus, configured to store one or more programs, wherein,
when the one or more programs are executed by one or more processors, the one or more processors are caused to implement the information presentation method provided in the present disclosure.

According to one or more embodiments of the present disclosure, the present disclosure provides a computer-readable storage medium, storing a computer program thereon, wherein the program, when executed by a processor, implements the information presentation method provided in the present disclosure.

An embodiment of the present disclosure further provides a computer program product, including a computer program or an instruction that, when executed by a processor, implements the information presentation method as described above.

It should also be noted that herein, relational terms, such as "first", "second" and the like, are merely used for distinguishing one entity or operation from another entity or operation, and do not necessarily require or imply that any such actual relationship or sequence exists between these entities or operations. Moreover, the terms "include", "contain" or any other variants thereof are intended to cover non-exclusive inclusions, such that a process, a method, an article or a device including a series of elements not only includes those elements, but also includes other elements that are not explicitly listed, or also includes elements inherent to such a process, method, article or device. If there are no more restrictions, the element defined by the sentence "including a..." does not exclude the existence of other identical elements in the process, the method, the article or the device that includes the element.

The foregoing descriptions are merely specific implementations of the present disclosure, and to enable those skilled in the art to understand or implement the present disclosure. Various modifications to these embodiments will be readily apparent to those skilled in the art, and the generic principles defined herein may be implemented in other embodiments without departing from the spirit or scope of the present disclosure. Thus, the present disclosure will not be limited to these embodiments described herein, but will conform to the widest scope consistent with the principles and novel features disclosed herein.

## Claims

1. An information presentation method, comprising:
presenting a target page, wherein the target page comprises an object detail presentation area and a candidate object set presentation area, and the candidate object set presentation area is used for presenting first abstract information of each candidate object in the candidate object set; and
presenting, in response to a selection operation for one piece of the first abstract information in the candidate object set presentation area, detail information of a first target object in the object detail presentation area, wherein the first target object is a candidate object corresponding to the selected first abstract information.

2. The method of claim 1, wherein presenting the target page comprises:
presenting a live streaming room presentation page, wherein the live streaming room presentation page comprises a summarized object presentation page, the live streaming room presentation page corresponds to an alternative object set, and the summarized object presentation page is used for presenting second abstract information of each alternative object in the alternative object set; and
presenting, in response to a selection operation for one piece of the second abstract information in the summarized object presentation page, the target page, wherein detail information of a second target object is presented in the object detail presentation area in the target page, and the second target object is an alternative object corresponding to the selected second abstract information; and
the candidate object set is a subset of the alternative object set.

3. The method of claim 2, wherein presenting, in response to the selection operation for the one piece of the second abstract information in the summarized object presentation page, the target page comprises:
presenting, in response to the selection operation for the one piece of the second abstract information in the summarized object presentation page, an object detail page, wherein the object detail page is used for presenting detail information of the second target object; and
presenting the target page, in a case that a browsing depth of the object detail page meets a preset depth condition and/or a first preset trigger operation for the object detail page is received, wherein the browsing depth is information for reflecting a browsing situation for the object detail page by a user.

4. The method of claim 3, wherein the object detail page comprises an image presentation area; the second target object comprises at least two pieces of image information; and the preset depth condition comprises that the image information being currently presented in the image presentation area is the last piece of image information in the at least two pieces of image information.

5. The method of claim 1, wherein remaining candidate objects in the candidate object set in addition to the first target object are non-first target objects; in the candidate object set presentation area, the first abstract information of the first target object is in a selected state; and the first abstract information of the non-first target objects is in a non-selected state; and
the candidate object set presentation area comprises a first presentation sub-area, and the first abstract information of the first target object is presented at a preset position in the first presentation sub-area; and the preset position comprises one of the following: a first presentation position and an intermediate presentation position.

6. The method of claim 5, wherein in a case that a number of pieces of the first abstract information accommodatable by the first presentation sub-area is less than a number of candidate objects in the candidate object set, the method further comprises:
switching, in response to a switching operation for the first abstract information in the first presentation sub-area, the first abstract information presented in the first presentation sub-area.

7. The method of claim 2, wherein one alternative object in the alternative object set is in an in-explanation state; the candidate object set presentation area further comprises first abstract information of the alternative object in the in-explanation state; and
the candidate object set presentation area comprises a first presentation sub-area and a second presentation sub-area, wherein the first presentation sub-area is used for presenting the first abstract information of the candidate objects; the second presentation sub-area is used for presenting the first abstract information of the alternative object in the in-explanation state; and the second presentation sub-area is located above the first presentation sub-area.

8. The method of claim 1, further comprising: after presenting the target page,
in response to a first size adjustment instruction, increasing a size of the object detail presentation area in a first direction and reducing a size of the candidate object set presentation area in the first direction; and
in response to a second size adjustment instruction, reducing the size of the object detail presentation area in the first direction and increasing the size of the candidate object set presentation area in the first direction.

9. The method of claim 8, wherein in response to the first size adjustment instruction, increasing the size of the object detail presentation area in the first direction and reducing the size of the candidate object set presentation area in the first direction, comprises:
estimating, in response to the first size adjustment instruction, the increased size of the object detail presentation area in the first direction to obtain an estimation result;
in a case that the estimation result is less than or equal to a preset size threshold value, increasing the size of the object detail presentation area in the first direction and reducing the size of the candidate object set presentation area in the first direction; and
in a case that the estimation result is greater than the preset size threshold value, presenting the object detail presentation area and hiding the candidate object set presentation area.

10. The method of claim 1, further comprising: after presenting the target page,
hiding, in response to a hiding instruction for the candidate object set, the candidate object set presentation area; and
unfolding, in response to an unfolding instruction for the candidate object set, the candidate object set presentation area.

11. An information presentation apparatus, comprising:
a presentation module, configured to present a target interface, wherein the target interface comprises an object detail presentation area and a candidate object set presentation area, and the candidate object set presentation area is used for presenting first abstract information of each candidate object in a candidate object set; and
an update module, configured to present, in response to a selection operation for one piece of first abstract information in the candidate object set presentation area, detail information of a first target object in the object detail presentation area, wherein the first target object is a candidate object corresponding to the selected first abstract information.

12. An electronic device, comprising:
one or more processors; and
a storage configured to store one or more programs, wherein
when the one or more programs are executed by the one or more processors, the one or more processors are caused to implement the method according to any of claims 1-10.

13. A computer-readable storage medium, storing a computer program thereon, wherein the program, when executed by a processor, implements the method according to any of claims 1-10.
